# EUROPÄISCHE PATENTSCHRIFT

(11) **EP 1 300 267 B1**
(45) Veröffentlichungstag und Bekanntmachung des Hinweises auf die Patenterteilung: **03.03.2004**
(21) Anmeldenummer: 02020722.1
(22) Anmeldetag: 14.09.2002
(51) Int. Cl.: B60H 1/00, B60H 1/08, B60H 1/32

(54) **Klimaanlage für Kraftfahrzeuge mit einem zwischen Kühlen und Heizen umschaltbaren Kältemittelkreislauf**
Air conditioning system for a vehicle with cooling circuit switchable between heating and cooling
Système de climatisation de véhicule avec circuit de réfrigérant commutable entre refroidissement et chauffage

(30) Priorität: 05.10.2001 DE 10149187
(43) Veröffentlichungstag der Anmeldung: 09.04.2003
(73) Patentinhaber: Bayerische Motoren Werke Aktiengesellschaft, 80809 München (DE)
(72) Erfinder: Schlenz, Dieter, Dr., 82288 Kottgeisering (DE); Knorr, Reinhard, 81929 München (DE); Mager, Robert, 81249 München (DE)

(56) Entgegenhaltungen:
- EP-A- 1 090 786
- DE-A- 3 047 955
- DE-A- 3 606 591
- DE-A- 19 806 654
- DE-A- 19 846 949
- US-A- 4 688 394

## Beschreibung

Die Erfindung betrifft ein Heiz- und Klimagerät für Kraftfahrzeuge mit einem von Kühlen auf Heizen umschaltbaren Kältemittelkreislauf, gemäß der Merkmale im Oberbegriff des Patentanspruchs 1, wie zum Beispiel offenbart in DE 198 06 654 A, DE 36 06 591 A, und DE 198 46 949A.

Die Erfindung geht aus von der nicht veröffentlichten deutschen Patentanmeldung 100 51 013. In dieser ist ein Heiz- und Klimagerät zum Temperieren von Fahrzeug-Innenräumen für Kraftfahrzeuge beschrieben. Dieses besteht aus einem ersten Wärmetauscher und einem Verdampfer, die in einem Kältemittelkreislauf eingebunden sind, sowie mit einer Umschaltvorrichtung zum Umschalten des Kältemittelkreislaufes von Kühlen auf Heizen durch Richtungsumkehr des Kältemittelstromes. Parallel zum Verdampfer ist ein Wärmetauscher im Kältemittelkreislauf angeordnet, der bei Heizbetrieb von dem Kältemittel durchströmt wird. Diese Anordnung zeichnet sich durch Vermeidung von Beschlag der Frontscheibe und Geruchsbelästigung im Fahrzeug-Innenraum, aufgrund der Vermeidung von Kondensatzuführung in den Fahrzeug-Innenraum, nach der Umschaltung von Kühlbetrieb auf Heizbetrieb aus. Bei der Zuführung von Klimatisierungsluft durchströmt diese zuerst den Verdampfer, anschließend den zweiten Wärmetauscher und zuletzt den Heizungswärmetauscher.

Aufgabe der vorliegenden Erfindung ist es, den Gesamtwirkungsgrad des Heiz- und Klimagerätes bei Heizbetrieb, besonders nach einem Kaltstart der Brennkraftmaschine weiter zu verbessern.

Diese Aufgabe wird durch das Merkmal im kennzeichnenden Teil des Patentanspruchs 1 gelöst.

Bei der beschriebenen Anordnung wird die Beschlagsproblematik beim Umschalten von Kühlen auf Heizen durch die Verwendung eines zweiten Wärmetauschers vollständig vermieden. Aufgrund der erfindungsgemäßen Anordnung erfolgt in der Startphase, insbesondere wenn der Kühlmittelkreislauf der Brennkraftmaschine noch kalt ist, die Erwärmung der Klimatisierungsluft ausschließlich durch den Verdampfer, der in einer Wärmepumpenschaltung betrieben wird, da die Wärmepumpe im Vergleich zu dem Kühlmittelkreislauf der Brennkraftmaschine eine höhere Dynamik (schnellere Temperaturänderung) besitzt. Da der Verdampfer der Wärmepumpe als letzter Wärmetauscher von der Klimatisierungsluft durchströmt wird, wird gerade in der beginnenden Aufheizphase die Dynamik des Aufheizvorganges unterstrichen. Durch das Verschieben der Wärmepotentiale kann bei betriebswarmen Motor der Heizungswärmetauscher die Aufheizung der Klimatisierungsluft zu einem großen Teil übernehmen. Der Verdampfer der Wärmepumpenschaltung übernimmt nun nur noch die Aufgabe eines Zuheizers. Dadurch kann der Verdichter zurückgeregelt werden und der energetische Einsatz durch den Verdichter wird in vorteilhafter Weise verringert.

Der Heizungswärmetauscher und der Wärmepumpenverdampfer können nach Anspruch 3 und 4 ein Bauteil sein, wobei die beiden Wärmetauscher thermisch voneinander entkoppelt werden sollten. Kompakte Anordnungen sind hierdurch möglich, die sich einfacher in das Gesamt-Package eines modernen Kraftfahrzeuges integrieren lassen. Unter Gesamt-Package wird der Zusammenbau aller Einzelkomponenten des Kraftfahrzeuges verstanden.

Im Folgenden ist die Erfindung anhand eines bevorzugten Ausführungsbeispieles in vier Figuren näher erläutert.
- Fig. 1: Schemadarstellung eines Kältemittelkreislaufs mit erfindungsgemäßer Anordnung der Wärmetauscher;
- Fig. 2: Schemadarstellung des Temperaturverlaufs in Richtung der Klimatisierungsluftströmung nach einem Start einer Brennkraftmaschine mit kaltem Kühlmittel;
- Fig. 3: wie Fig. 2, jedoch mit einem warmem Kühlmittelkreislauf der Brennkraftmaschine;
- Fig. 4: wie Fig. 2, jedoch mit einem heißen Kühlmittelkreislauf der Brennkraftmaschine.

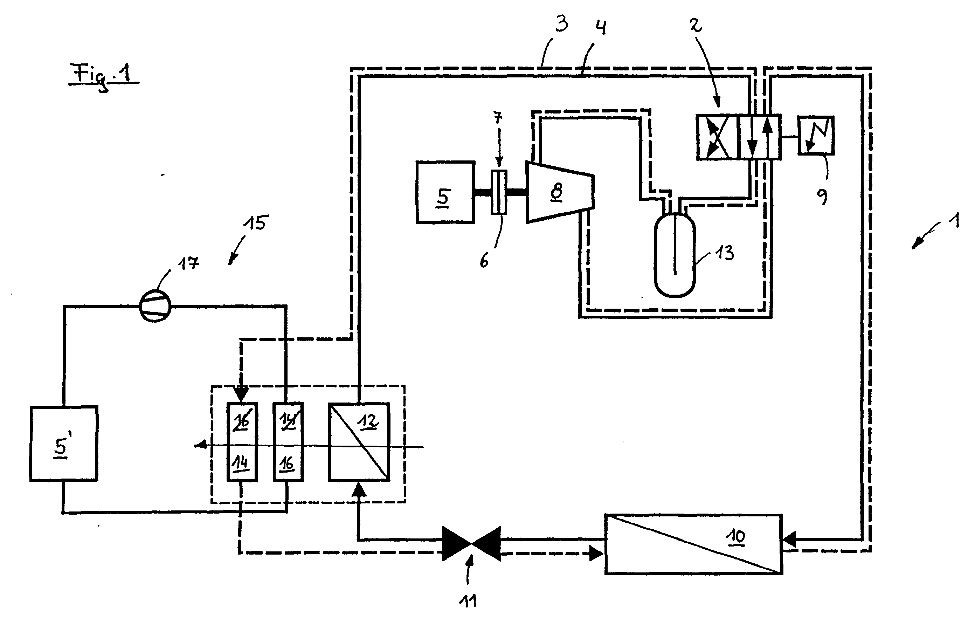

Fig. 1 zeigt eine Schemadarstellung eines Kältemittelkreislaufs 1, der durch Umschalten des Kältemittelkreislaufs 1 von Kühlen auf Heizen durch Richtungsumkehr des Kältemittelstromes mit einer Umschaltvorrichtung 2 umschaltbar ist. Der Kältemittelkreislauf 1 stellt somit je nach Stellung der Umschaltvorrichtung 2 einen Heizkreislauf 3 oder einen Kühlkreislauf 4 dar. Folgende Elemente beinhaltet der Kältemittelkreislauf 1 grundsätzlich: Eine Antriebseinheit 5, eine Kupplung 6, die über eine Steuerleitung 7 angesteuert wird, einen Kompressor 8, die Umschaltvorrichtung 2 mit einem Stellelement 9, einen ersten Wärmetauscher 10, ein Expansionsorgan 11, einen Verdampfer 12, einen Abscheidebehälter 13 und einen zweiten Wärmetauscher 14.

Im Kühlbetrieb treibt die Antriebseinheit 5 über die Kupplung 6, die über die Steuerleitung 7 gesteuert ist, den Kompressor 8 an, der ein Kältemittel durch den Kältemittelkreislauf 1 zuerst durch die Umschaltvorrichtung 2, die von dem Stellelement 9 angetrieben wird, weiter durch den ersten Wärmetauscher 10, dann durch das Expansionsorgan 11, weiter durch den Verdampfer 12 und anschließend durch die Umschaltvorrichtung 2 durch den Abscheidebehälter 13 und schließlich wieder zurück zum Kompressor 8, befördert. Somit ist der geschlossene Kühlkreislauf 4 gebildet.

Im Heizbetrieb wird die Strömungsrichtung im Kältemittelkreislauf 1 durch die Umschaltvorrichtung 2, die beispielsweise ein elektrisch, pneumatisch oder andersartig betriebenes 2/4-Wege-Ventil ist, ab dieser umgedreht. Das Kältemittel durchströmt die Elemente nun in umgekehrter Reihenfolge, jedoch durchströmt es nicht den Verdampfer 12, sondern bedingt durch die Richtungsumkehr den zweiten Wärmetauscher 14. Dies entspricht dem Heizkreislauf 3.

Bei Kühlbetrieb komprimiert der Kompressor 8 das dampfförmige Kältemittel, hier CO₂ und heizt es dabei auf (führt Energie zu). Es sind auch andere Kältemittel, wie z.B. brennbare Kältemittel einsetzbar. Anschließend wird es im ersten Wärmetauscher 10 (bei anderen Kältemitteln durch Kondensation) abgekühlt (Energieabgabe) und verflüssigt. Die dem Kältemittel im Kompressor zugeführte Energie wird z. B. an die Umgebung abgegeben. Anschließend wird das (flüssige) Kältemittel in dem Expansionsorgan 11 entspannt. Dies geschieht im Verdampfer 12. Mit dem Verdampfer 12 wird die zur Erwärmung (Verdampfung) erforderliche Energie für das Kältemittel der, von einem hier nicht dargestellten Gebläse zugeführten Klimatisierungsluft, dargestellt durch einen Pfeil, entnommen, bevor diese zur Kühlung dem Fahrgast-Innenraum zugeführt wird. Anschließend wird das abgekühlte Kältemittel wieder über die Umschaltvorrichtung 2 in einen Abscheidebehälter 13 zurück zum Kompressor 8 gefördert.

Die Funktionsweise des Heizkreislaufs wird im Folgenden beschrieben: Der Kompressor 8 verdichtet das Kältemittel, heizt es dadurch auf und fördert es durch die Umschaltvorrichtung 2 zu dem zweiten Wärmetauscher 14. Hier gibt das durch die Kompression erwärmte Kältemittel seine Wärmeenergie an die Klimatisierungsluft ab (Wärmepumpen-Betrieb). Der auf diese Weise erwärmte Klimatisierungsluftstrom wird wiederum von dem nicht dargestellten Ventilator in den FahrgastInnenraum befördert. Das im zweiten Wärmetauscher 14 abgekühlte Kältemittel wird nun durch das Expansionsorgan 11 und anschließend durch den ersten Wärmetauscher 10 weiterbefördert. Im ersten Wärmetauscher 10 gibt das Kältemittel Energie ab und wird durch die Umschaltvorrichtung 2 und den Abscheidebehälter 13 hindurch zurück zum Kompressor 8 befördert.

Weiterhin zeigt Fig. 1 einen Kühlmittelkreislauf 15 für eine flüssigkeitsgekühlte Antriebseinheit 5'. Der Kühlmittelkreislauf 15 besteht aus der Antriebseinheit 5', einem Heizungswärmetauscher 16 und einer Pumpe 17. Dieser Kühlmittelkreislauf 15 ist die primäre Wärmequelle zur Beheizung des Fahrgast-Innenraumes. Das heißt, sobald die Abwärme der Antriebseinheit 5' ausreicht um den Fahrtgast-Innenraum zu beheizen, übernimmt diese die Funktion, die bis zu diesem Zeitpunkt das Heiz-Klimagerät hatte, die im Wärmepumpen-Betrieb betrieben worden ist. Grundsätzlich kann gesagt werden, dass ab dem Start der Antriebseinheit, solange die Antriebseinheit noch kalt und eine vorgegebene Temperatur noch nicht erreicht ist, das Heiz-Klimagerät die Heizung übernimmt. Überschreitet der Kühlmittelkreislauf 15 eine vorgegebene Temperatur, so übernimmt diese über den Heizungswärmetauscher 16 die Funktion der Heizung. Das Heiz-Klimagerät wird nun bedarfsgerecht umgeschaltet auf Heiz- oder Kühlbetrieb.

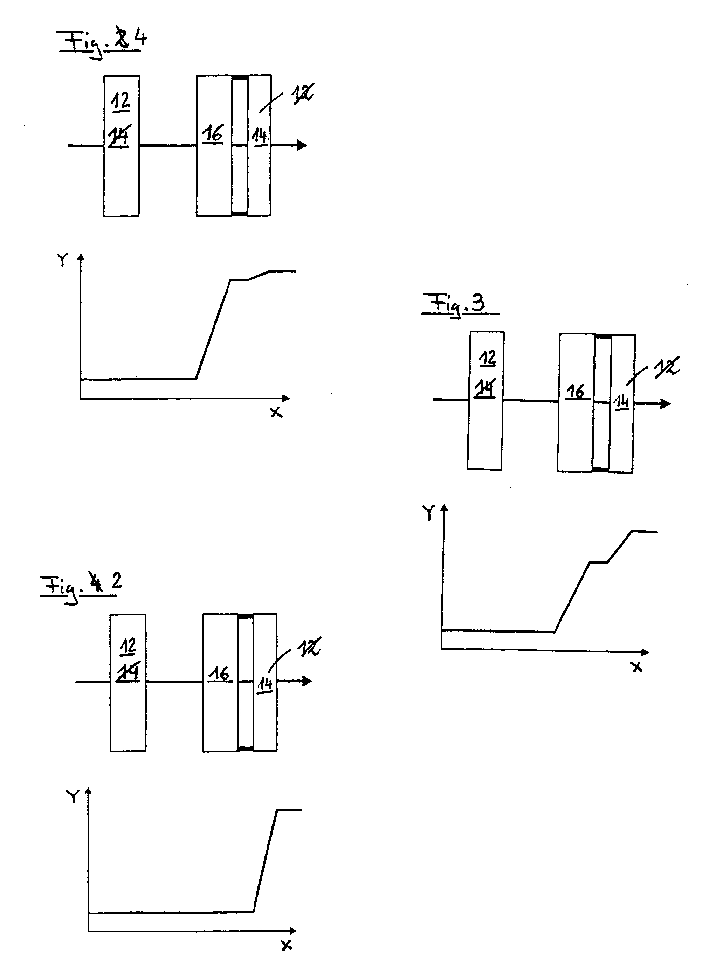

In den Fig. 2, 3 und 4 ist jeweils schematisch die erfindungsgemäße Anordnung des zweiten Wärmetauschers 14 , in Verbindung mit dem Heizungswärmetauscher 16 und dem Verdampfer 12 schematisch dargestellt. Durch einen Pfeil ist schematisch der Klimatisierungs-Luftstrom dargestellt. In den Fig. 2, 3 und 4 durchströmt die Klimatisierungsluft jeweils zuerst den Verdampfer 12, anschließend den Heizungswärmetauscher 16 und zum Schluss den zweiten Wärmetauscher 14. Unter jeder Figur ist schematisch ein zughöriges Diagramm dargestellt, in dem die Temperatur (ohne Einheit) der Klimatisierungsluft über ihrer zurückgelegten Strecke durch den Verdampfer 12, den Heizungswärmetauscher 16 und den zweiten Wärmetauscher 14 dargestellt ist.

Fig. 2 zeigt den Verlauf der Temperatur der Klimatisierungsluft über ihre zurückgelegte Strömungsstrecke nach einem Start der Brennkraftmaschine mit einem kalten Kühlmittelkreislauf. Deutlich erkennbar ist, dass ausschließlich der zweite Wärmetauscher 14, der Heiz- und Klimaanlage, die im Wärmepumpenbetrieb betrieben wird, die Klimatisierungsluft aufheizt.

Fig. 3 zeigt den Verlauf der Temperatur der Klimatisierungsluft über ihre zurückgelegte Strömungsstrecke nach wenigen Minuten Brennkraftmaschinenbetrieb, wenn das Kühlmittel bereits warm ist. Deutlich erkennbar ist, dass die Luft bereits im Heizungs-Wärmetauscher 16 vorgeheizt wird und anschließend vom zweiten Wärmetauscher 14 auf die vom Fahrer gewünschte Einlasstemperatur in die Fahrgastzelle fertig temperiert wird.

In Fig. 4 zeigt den Verlauf der Temperatur der Klimatisierungsluft über ihre zurückgelegte Strömungsstrecke, nun nach längerer Betriebsdauer der Brennkraftmaschine, d. h. wenn das Kühlmittel bereits heiß (> 80°C) ist. Deutlich erkennbar ist, wie das Kühlmittel bereits nach dem Heizungswärmetauscher 16 fast die vorgewählte Einströmtemperatur erreicht hat, während der zweite Wärmetauscher 14 nur noch eine Restaufheizung übernehmen muss.

Durch die erfindungsgemäße Anordnung wird die Heiz- und Klimaanlage nur noch dann zum Restaufheizen benötigt, wenn die vom Fahrer vorgegebene Einströmtemperatur über der Temperatur liegt, die durch die Aufheizung ausschließlich im Heizungswärmetauscher 16 möglich ist. Durch Ausnützung dieses Effektes, kann Kraftstoff beim Betrieb der Brennkraftmaschine eingespart werden.

Der Heizungswärmetauscher 16 und der Verdampfer 12 können zur weiteren Optimierung gemeinsam in einem Gehäuse angeordnet sein, jedoch sollte für diesen Fall auf eine thermische Entkopplung geachtet werden. Für eine baulich noch kleinere Ausführung können auch der zweite Wärmetauscher 14, der Heizungswärmetauscher 16 sowie der Verdampfer 12 gemeinsam in einem Gehäuse angeordnet werden, jedoch gilt auch wie zuvor, dass auf eine thermische Entkopplung der einzelnen Komponenten geachtet werden muss.

Besonders ausgeprägt ist die Kraftstofferspamis bei Motoren mit einem hohen Wirkungsgrad, bzw. Brennkraftmaschinen, die über einen längeren Zeitraum im Teillastbetrieb betrieben werden. In beiden Fällen wird von der Brennkraftmaschine weniger Wärme an das Kühlmittelsystem abgegeben. Dies trifft auch moderne Diesel-Motoren zu.

### Bezugszeichenliste

- 1: Kältemittelkreislauf
- 2: Umschaltvorrichtung
- 3: Heizkreislauf
- 4: Kühlkreislauf
- 5, 5': Antriebseinheit
- 6: Kupplung
- 7: Steuerleitung
- 8: Kompressor
- 9: Stellelement
- 10: Erster Wärmetauscher
- 11: Expansionsorgan
- 12: Verdampfer
- 13: Abscheidebehälter
- 14: Zweiter Wärmetauscher
- 15: Kühlmittelkreislauf
- 16: Heizungswärmetauscher
- 17: Pumpe

## Patentansprüche

1. Heiz- und Klimagerät zum Temperieren von Fahrzeug-Innenräumen für Kraftfahrzeuge, mit einer Umschaltvorrichtung (2) zum Umschalten des Kältemittelkreislaufes (1) von Kühlen auf Heizen durch Richtungsumkehr des Kältemittelstromes, bestehend aus zumindest einem Verdampfer (12) für den Kühlbetrieb und einem Heizungswärmetauscher (16) für den Heizbetrieb, die von einer Klimatisierungsluft durchströmt werden,
**dadurch gekennzeichnet, daß** einem zweiten Wärmetauscher (14) vorgesehen ist, und dass bei Heizbetrieb zuerst der Verdampfer (12), dann der Heizungswärmetauscher 16 und anschließend der zweite Wärmetauscher (12) von der Klimatisierungsluft in Strömungsrichtung durchströmbar ist.

2. Heiz- und Klimagerät nach Anspruch 1,
**dadurch gekennzeichnet, dass** bei Kühlbetrieb zuerst der zweite Wärmetauscher 14, dann der Heizungswärmetauscher 16 und anschließend der Verdampfer (12) von der Klimatisierungsluft in Strömungsrichtung durchströmbar ist.

3. Heiz- und Klimagerät nach Anspruch 1 oder 2,
**dadurch gekennzeichnet, dass** der Verdampfer (12) und der Heizungswärmetauscher (16) in einem gemeinsamen Gehäuse angeordnet sind.

4. Heiz- und Klimagerät nach Anspruch 1 oder 2,
**dadurch gekennzeichnet, dass** der Verdampfer (12), der zweite Wärmetauscher (14) und der Heizungswärmetauscher (16) in einem gemeinsamen Gehäuse angeordnet sind.

## Claims

1. A heating and air-conditioning unit for the interior of motor vehicles, comprising a change-over device (2) for switching the coolant circuit (1) over from cooling to heating by reversing the direction of the flow of coolant, the unit comprising at least one evaporator (12) for cooling operation and a heat exchanger (16) for heating operation, both flowed through by air for conditioning,
**characterised in that** a second heat exchanger (14) is provided, and during heating operation the air for conditioning flows in the flow direction first through the evaporator (12), then through the heat exchanger (16) and then through the second heat exchanger (14).

2. A heating and air-conditioning unit according to claim 1,
**characterised in that** during cooling operation the air for conditioning flows in the flow direction first through the second heat exchanger (14), then through the heating heat exchanger (16) and finally through the evaporator (12).

3. A heating and air-conditioning unit according to claim 1 or claim 2,
**characterised in that** the evaporator (12) and the heating heat exchanger (16) are disposed in a common casing.

4. A heating and air-conditioning unit according to claim 1 or claim 2,
**characterised in that** the evaporator (12), the second heat exchanger (14) and the heating heat-exchanger (16) are disposed in a common casing.

## Revendications

1. Dispositif de chauffage et de climatisation permettant de tempérer des habitacles de véhicules automobiles, comportant un dispositif de commutation (2) permettant de commuter le circuit de réfrigérant (1) entre le refroidissement et le chauffage en modifiant la direction du flux de réfrigérant, composé d'au moins un évaporateur (12) pour le fonctionnement du refroidissement et d'un échangeur de chaleur de chauffage (16) pour le fonctionnement du chauffage, qui sont traversés par de l'air de climatisation,
**caractérisé en ce qu'**
il est prévu un deuxième échangeur de chaleur (14) et **en ce que** lors du fonctionnement du chauffage, l'air de climatisation peut traverser, en direction du flux, tout d'abord l'évaporateur (12), puis l'échangeur de chaleur de chauffage (16) et enfin le deuxième échangeur de chaleur (14).

2. Dispositif de chauffage et de climatisation selon la revendication 1,
**caractérisé en ce que**
lors du fonctionnement du refroidissement, l'air de climatisation peut traverser, en direction du flux, tout d'abord le deuxième échangeur de chaleur (14), puis l'échangeur de chaleur de chauffage (16) et enfin l'évaporateur (12).

3. Dispositif de chauffage et de climatisation selon la revendication 1 ou 2,
**caractérisé en ce que**
l'évaporateur (12) et l'échangeur de chaleur de chauffage (16) sont disposés dans un boîtier commun.

4. Dispositif de chauffage et de climatisation selon la revendication 1 ou 2,
**caractérisé en ce que**
l'évaporateur (12), le deuxième échangeur de chaleur (14) et l'échangeur de chaleur de chauffage (16) sont placés dans un boîtier commun.
